# EUROPÄISCHE PATENTSCHRIFT

(11) **EP 2 265 831 B1**
(45) Veröffentlichungstag und Bekanntmachung des Hinweises auf die Patenterteilung: **10.12.2014**
(21) Anmeldenummer: 09721181.7
(22) Anmeldetag: 10.03.2009
(51) Int. Cl.: F16B 41/00

(54) **SCHRAUBTEIL FÜR EINE BEFESTIGUNG EINER FELGE EINES KRAFTFAHRZEUGS**
SCREW PORTION FOR FASTENING A RIM OF A MOTOR VEHICLE
PIÈCE DE VISSAGE POUR UNE FIXATION D'UNE JANTE D'UNE AUTOMOBILE

(30) Priorität: 10.03.2008 DE 102008013489
(43) Veröffentlichungstag der Anmeldung: 29.12.2010
(73) Patentinhaber: ABC Umformtechnik GmbH & Co. KG, 58285 Gevelsberg (DE)
(72) Erfinder: LANNERÈE, Daniel, F-94170 Le Perreux (FR)
(74) Vertreter: Patentanwälte Bauer Vorberg Kayser
(86) Internationale Anmeldenummer: PCT/EP2009/052750
(87) Internationale Veröffentlichungsnummer: WO 2009/112469

(56) Entgegenhaltungen:
- EP-A- 1 577 572
- DE-B4- 19 605 177
- GB-A- 2 174 080

## Beschreibung

Die Erfindung bezieht sich auf ein Schraubteil für eine diebstahlgesicherte Befestigung einer Felge eines Kraftfahrzeugs nach dem Oberbegriff des Patentanspruchs 1.

Ein derartiges Schraubteil ist aus der DE 196 05 177 B4 bekannt. Innennut und Außennut haben einen rechteckförmigen Querschnitt. Der Federring folgt den Linien eines Quadrats und hat eine Öffnung in der Mitte einer Quadratseite. Wie die Montage erfolgen soll, wird nicht ausgeführt und ist nach der dargestellten Konstruktion unklar. Keine der beiden Nuten hat eine radiale Tiefe, die größer ist als der Durchmesser des für den Federring verwendeten Drahtes.

Das Schraubteil hat weiterhin einen Schraubbereich, der als Schraube oder Mutter ausgebildet ist. Der Ringkörper ist gegenüber dem Kopf drehbar. Dadurch wird erreicht, dass ein am Ringkörper angesetztes Werkzeug nicht unmittelbar den Kopf drehen kann. Nun ist allerdings die Befestigung des Ringkörpers am Kopf bei der DE 196 05 177 B4 dergestalt, dass der Ringkörper leicht abgezogen werden kann. Dies ist nachteilig. Die vorteilhafte Wirkung des Ringkörpers tritt nur unter der Voraussetzung ein, dass der Ringkörper mit normalen Mitteln praktisch nicht zerstörungsfrei wieder vom Kopf entfernt, insbesondere zurückgeschoben werden kann. Bei dem vorbekannten Schraubteil kann dies erreicht werden, indem die Klinge eines Schraubendrehers in den Spalt zwischen dem unteren Ende des Ringkörpers und dem Kopf eingeschoben und anschließend gedreht wird.

Aus der EP 1 577 572 A1 ist ein Schraubteil bekannt, das gegen unbefugtes Lösen gesichert ist. Es hat eine Kappe, die den Kopf oder den Endbereich einer normalen Schraube übergreift. In der Kappe sind Löcher vorgesehen. Sie befinden sich außerhalb eines Federrings, der zwischen der Kappe und dem Schraubenkopf bzw. einer Mutter angeordnet ist. Hierfür ist in der Kappe eine Nut vorgesehen, die dort Einbuchtungen hat, wo sich die Löcher befinden. An diesen Stellen hat der Federring auch Vorsprünge.

Hier setzt nun die Erfindung ein. Sie hat es sich zur Aufgabe gemacht, das Schraubteil der eingangs genannten Art dahingehend weiterzubilden, dass seine Montage möglich ist, jedenfalls mit normalen Mitteln durchführbar ist, dass es in der Anwendung sicherer ist und dass insbesondere ein Abziehen des Ringkörpers vom Kopf praktisch unmöglich ist.

Diese Aufgabe wird ausgehend von dem Schraubteil der eingangs genannten Art dadurch gelöst, dass der Federring gewellt ist und Innenbereiche aufweist, dass die Innenbereiche in die Außennut eingreifen, dass eine umlaufende Montageschräge am Ringkörper und/oder am Kopf vorgesehen ist, und dass sich diese Montageschräge in Montagerichtung vor der jeweiligen Nut befindet; und dass die Endbereiche in einem Vorzustand der Montage, in dem der Federring in die nicht mit der Montageschräge verbundene Nut eingesetzt ist, die Montageschräge aber noch nicht den Federring passiert hat, sich innerhalb der nicht mit der Montageschräge verbundenen Nut befinden.

Durch die Montageschräge wird erreicht, dass während des Montagevorgangs der Federring in diejenige Nut hineingedrückt wird, die nicht mit der Montageschräge verbunden ist. Vorzugsweise ist die Montageschräge am Ringkörper vorgesehen. Die relevante Nut ist so ausreichend tief ausgebildet, dass sich der Federring praktisch vollständig in ihr einfinden kann, wenn der Federring durch die Montageschräge und nach dem Passieren der Montageschräge in einem komprimierten Zustand ist.

Bei der Montage wird der Federring in die Nut eingesetzt, die nicht mit der Montageschräge verbunden ist. Er ragt dann aus dieser Nut vor, entweder nach außen oder nach innen. Anschließend werden Ringkörper und Kopf axial zusammengefügt, der Ringkörper wird über den Kopf gesteckt. Dabei kommt die Montageschräge an den Federring und drückt diesen bei Fortsetzen der axialen Bewegung zunehmend in die Nut, in der er schon ist. Sobald die beiden Nuten auf gleicher axialer Position sind, entspannt sich der Federring, er greift nun in die Nut ein, die mit der Montageschräge verbunden ist.

Die Montageschräge ist umlaufend, sie wird vorteilhafterweise durch eine Kegelfläche begrenzt. Sie befindet sich an dem Teil, also am Ringkörper oder am Kopf, in dessen Nut der Federring während der Montage einschnappt. Sie hat am unteren Ende des Ringkörpers einen unteren lichten Innendurchmesser der Montageschräge, dieser ist dem Außendurchmesser des Federrings in entspannter Position angepasst. Die Montageschräge verjüngt sich ausgehend von diesem unteren lichten Innendurchmesser auf einen oberen lichten Innendurchmesser der Montageschräge, der dem Innendurchmesser des Ringkörpers angepasst ist, insbesondere gleich diesem Innendurchmesser des Ringkörpers ist. Weitere Vorteile und Merkmale der Erfindung ergeben sich aus den übrigen Ansprüchen sowie der nun folgenden Beschreibung eines nicht einschränkend zu verstehenden Ausführungsbeispiels, das unter Bezugnahme auf die Zeichnung im Folgenden näher erläutert wird. In dieser Zeichnung zeigen:

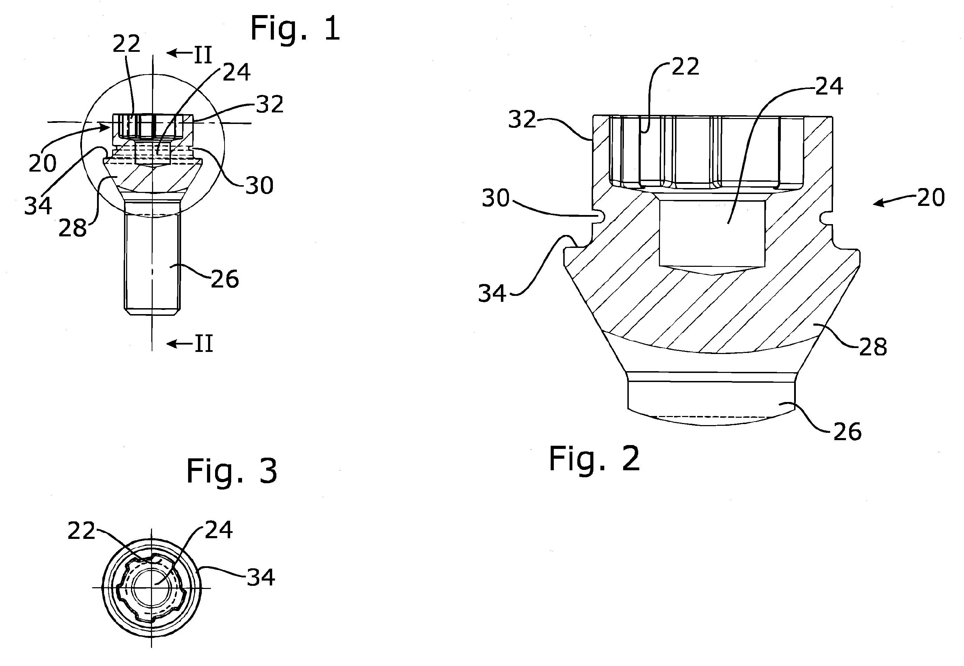

- Fig. 1:: eine Seitenansicht eines Schraubteils mit Kopf und Schraubbereich, jedoch ohne Ringkörper und ohne Federring,
- Fig. 2:: eine vergrößerte, schnittbildliche Darstellung im Sinne der Schnittlinie II-II in Fig. 1 eines oberen Teils des Schraubteils von Figur 1,
- Fig. 3:: eine Draufsicht auf das Schraubteil nach Fig. 1,
- Fig. 4:: eine Draufsicht auf einen Federring in einem Zustand der der montierten Position entspricht,
- Fig. 5:: eine Seitenansicht des Federrings nach Figur 4,
- Fig. 6:: eine Seitenansicht eines Ringkörpers,
- Fig. 7:: einen Schnitt entlang der Schnittlinie VII-VII in Figur 6 und
- Fig. 8:: eine Draufsicht auf den Ringkörper nach Figur 6.

Das Schraubteil hat einen Kopf 20, der eine verschlüsselte Antriebsfläche 22 aufweist. Es ist eine zentrische Ausnehmung 24 vorgesehen, in die ein Innenteil eingepresst werden kann, das seinerseits wieder eine verschlüsselte Fläche hat und in einer gewünschten Drehposition gegenüber der Antriebsfläche 22 ausgerichtet sein kann. Dieses Innenteil ist an sich bekannt, es ist nicht dargestellt.

In bekannter Weise hat das Schraubteil einen Schraubbereich 26, der hier als Gewindebolzen ausgeführt ist und einen Anlagebereich 28.

Im Kopf 20 ist eine Außennut 30 vorgesehen, die über 360° umläuft. Sie befindet sich in einer zylindrischen Außenfläche 32 und etwas oberhalb einer radialen Stufe 34. Die Außennut 30 befindet sich axial gesehen zwischen der Antriebsfläche 22 und dieser radialen Stufe 34. Sie ist in einem Bereich, wo größerer Querschnitt vorliegt. Sie befindet sich axial gesehen auf gleicher Höhe wie die Ausnehmung 24.

Im konkreten Ausführungsbeispiel hat die Nut eine Tiefe von 1,05 mm. Ihr Boden ist rund. Sie wird in ihrer Tiefe durch einen Radius 0,55 mm begrenzt und hat im Querschnitt gesehen die Form eines halben Langlochs. Sie mündet unter rechtem Winkel in die Außenfläche 32 ein.

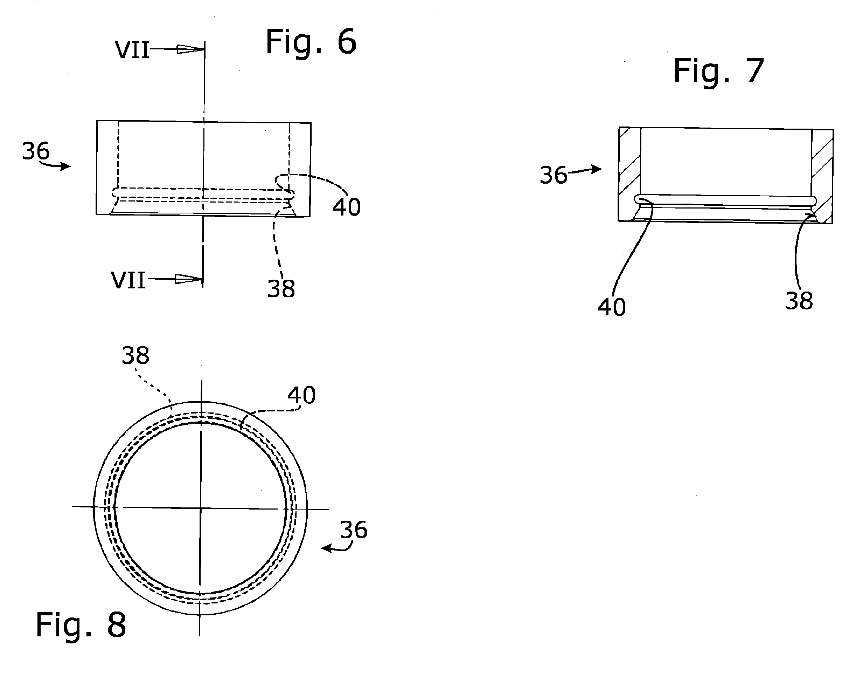

Ein aus den Figuren 6 bis 8 ersichtlicher Ringkörper 36 hat eine axiale Länge, die dem axialen Abstand der radialen Stufe 34 vom freien Ende des Kopfs 20 angepasst ist. Die Breite dieser Stufe 34 in Radialrichtung bestimmt die radiale Dicke des Ringkörpers 36. Der Ringkörper 36 hat an seinem unteren Endbereich 48, dort an der Innenseite, eine Montageschräge 38. Sie wird durch einen Kegel begrenzt. Diese Montageschräge 38 hat am freien, unteren Ende einen unteren lichten Innendurchmesser und verjüngt sich bis zu einem oberen lichten Innendurchmesser, der dem Innendurchmesser des Ringkörpers 36 entspricht, gegebenenfalls plus minus 2 bis 10% davon abweicht. In unmittelbarer Nähe der Stelle des oberen lichten Innendurchmessers erfolgt ein Übergang in eine Innennut 40, die in die zylindrische Innenfläche des Ringkörpers 36 eingearbeitet ist. Sie hat einen runden Boden. Dieser hat ebenfalls einen Radius 0,55 mm, jedoch lediglich eine Tiefe von 0,65 mm. Die Montageschräge 38 schließt mit einer Achse einen Winkel von 30° ein, der Winkel liegt typischerweise zwischen 15 und 40°. Der untere lichte Innendurchmesser ist geringfügig größer als der größte Durchmesser der Innennut 40, also der Durchmesser an deren tiefster Stelle. Der Unterschied beträgt etwa 2 bis 15%.

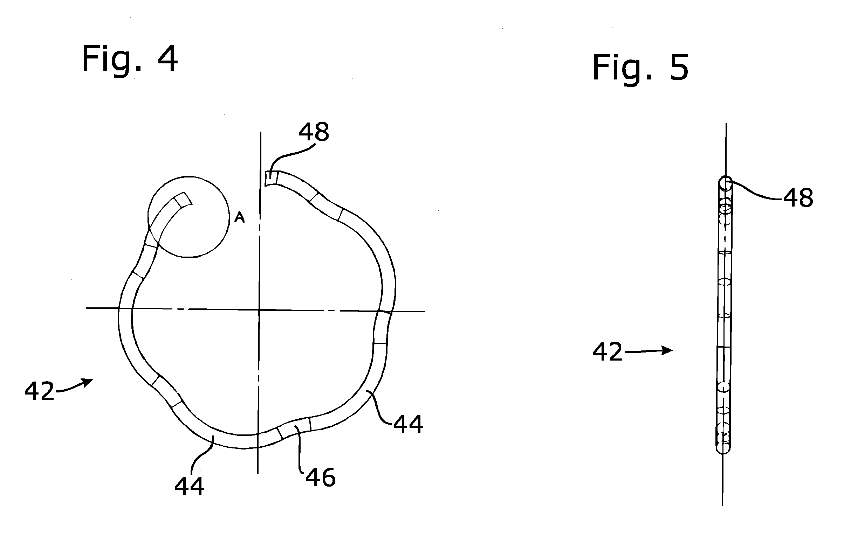

Aus den Figuren 4 und 5 ist ein Federring 42 ersichtlich. Er ist aus einem Draht mit Durchmesser 1 mm gebogen und erstreckt sich im montierten Zustand über 325°. Er ist sinusförmig gewellt. Er hat Außenbereiche 44 und Innenbereiche 46. Er ist in Umlaufrichtung periodisch, wobei eine Periode jeweils aus einem Innenbereich 46 und einem Außenbereich 44 besteht. Der gezeigte Federring 42 hat fünf Perioden. Im montierten Zustand greifen die Außenbereiche 44 in die Innennut 40 und greifen die Innenbereiche 46 in die Außennut 30.

In seinem komprimierten Zustand befindet sich der Federring 42 praktisch vollständig innerhalb der Außennut 30. Er ist dann praktisch nicht mehr oder wenig gewellt. Er liegt dann an der Innenwand des Ringkörpers 36 an. Sobald während der Montage der Ringkörper 36 soweit auf den Kopf 20 aufgeschoben ist, dass die beiden Nuten 30, 40 einander gegenüber liegen, verlässt der Federring 42 den komprimierten Zustand und entspannt sich, da bei greifen seine Außenbereiche 44 in die Innennut 40 ein. Auf diese Weise ist ein Zustand erreicht, der ohne zerstören mindestens eines Bauteils nicht wieder gelöst werden kann.

Der Federring 42 hat zwei Endbereiche 48. Diese sind so gestaltet, dass sie bei der Montage nicht stören. Wie Figur 4 zeigt, sind sie so gebogen, dass sie zur Außennut 30 hinweisen. Vorzugsweise befinden sich die Endbereiche 48 innerhalb eines Innenbereichs.

Die wellenförmige Ausbildung des Federrings 42 hat den Vorteil, dass dieser gut in den komprimierten Zustand gebracht werden kann. Dabei verringert sich die Öffnung, die Endbereiche 48 berühren aber einander nicht, sondern bleiben weiterhin im Abstand. Die Länge des Materials, aus dem der Federring 42 hergestellt ist, ist kleiner als der Umfang der Außenfläche 32.

Im montierten Zustand ist die Montageschräge 38 nicht sichtbar. Sie ist optisch verdeckt. Es wird angestrebt, dass im montierten Zustand die untere Kante des Ringskörpers 36 an der Stufe 34 anliegt.

Der Federring 42 ist wie folgt bemessen: Im ausgebauten Zustand hat er einen Außendurchmesser, der durch die Außenbereiche 44 definiert wird, und etwas größer ist, beispielsweise 2 bis 20% größer ist als der größte Durchmesser der Innennut 40, also der Durchmesser des Tiefsten der Innennut 40. In diesem Zustand hat er weiterhin einen Innendurchmesser, der durch die Innebereiche 46 bestimmt ist, und etwas kleiner ist, insbesondere 2 bis 10% kleiner ist als der kleinste Durchmesser der Außennut 30 des Kopfes 20. Dadurch liegt im montierten Zustand der Federring 42 mit seinen Innenbereichen 46 elastisch am Boden der Außennut 30 an und liegt weiterhin mit seinen Außenbereichen 44 elastisch am Boden der Innennut 40 an. Auf diese Weise wird eine Bremswirkung bzw. Reibwirkung zwischen Ringkörper 36 und Kopf 20 erreicht. Die Außenfläche 32 ist dem Innenmantel des Ringkörpers 36 im Durchmesser passgenau angepasst, so dass möglichst wenig Spiel im montierten Zustand vorliegt, jedoch eine Montage möglich ist. Der Übergang zwischen der Außenfläche 32 und der Stufe 34 ist abgeschrägt oder gerundet, er befindet sich im montierten Zustand in unmittelbarer Nachbarschaft der Montageschräge 38. Diese ermöglicht es, dass der genannte Übergang nicht exakt im rechten Winkel ausgebildet ist.

## Patentansprüche

1. Schraubteil für eine diebstahlgesicherte Befestigung einer Felge eines Kraftfahrzeugs mit a) einem Kopf (20), der eine verschlüsselte Antriebsfläche (22) zur Einleitung eines Drehmoments aufweist, mit b) einem Ringkörper (36), der den Kopf (20) umgibt und eine Außenfläche hat, wobei im Ringkörper (36) eine Innennut (40) und im Kopf (20) eine gegenüberliegende Außennut (30) vorgesehen ist und mit c) einem unrunden Federring (42), der zwischen Kopf (20) und Ringkörper (36) angeordnet ist, in die Innennut (40) und in die Außennut (30) eingreift, Außenbereiche (44) aufweist, die in die Innennut (40) eingreifen, und zwei Endbereiche (48) aufweist, **dadurch gekennzeichnet, dass** der Federring (42) gewellt ist und Innenbereiche (46) aufweist, dass die Innenbereiche (46) in die Außennut (30) eingreifen, dass eine umlaufende Montageschräge (38) am Ringkörper (36) und/oder am Kopf (20) vorgesehen ist, dass sich die Montageschräge (38) in Montagerichtung vor der jeweiligen Nut (30, 40) befindet, und dass die Endbereiche (48) in einem Vorzustand der Montage, in dem der Federring (42) in die nicht mit der Montageschräge (38) verbundene Nut (30 oder 40) eingesetzt ist, die Montageschräge (38) aber noch nicht den Federring (42) passiert hat, sich innerhalb der nicht mit der Montageschräge (38) verbundenen Nut (30 oder 40) befinden.

2. Schraubteil nach Anspruch 1, **dadurch gekennzeichnet, dass** beide Nuten (30, 40) sich über je 360° erstrecken.

3. Schraubteil nach Anspruch 1 oder 2, **dadurch gekennzeichnet, dass** der Federring (42) in einem Zwischenzustand während der Montage sich praktisch nur in einer der beiden Nuten (30, 40) befindet, wobei er durch Druck auf seine Außenbereiche (44) nach innen und Druck auf seinen Innenbereiche (46) nach außen innerhalb der Nut (30, 40) gehalten ist und einen komprimierten Zustand einnimmt, und dass dieser Zustand während der Montage auftritt, wenn der Ringkörper (36) axial teilweise auf den Kopf (20) aufgeschoben ist und nachdem die Montageschräge (38) den Federring (42) passiert hat, aber bevor der montierte Zustand erreicht ist, also bevor die beiden Nuten (30, 40) einander gegenüberliegen.

4. Schraubteil nach Anspruch 3, **dadurch gekennzeichnet, dass** der Federring (42) im komprimierten Zustand sich über weniger als 360° erstreckt.

5. Schraubteil nach einem der vorangegangenen Ansprüche, **dadurch gekennzeichnet, dass** sich der Federring (42) im montierten Zustand über einen Winkelbereich erstreckt, der kleiner als im komprimierten Zustand ist.

6. Schraubteil nach einem der vorangegangenen Ansprüche, **dadurch gekennzeichnet, dass** die Dicke d der Ringfeder etwas kleiner, insbesondere 5 bis 25% kleiner ist als die axiale Breite mindestens einer der Nuten (30, 40).

7. Schraubteil nach einem der vorangegangenen Ansprüche, **dadurch gekennzeichnet, dass** beide Nuten (30, 40) gleiche axiale Breite aufweisen.

8. Schraubteil nach einem der vorangegangenen Ansprüche, **dadurch gekennzeichnet, dass** diejenige Nut (30 oder 40), die mit der Montageschräge (38) verbunden ist, eine radiale Tiefe hat, die kleiner als die in gleicher Richtung ermittelte Querschnittsabmessung des Federrings (42) ist, vorzugsweise aber größer als die Hälfte dieser Querschnittsabmessung ist.

9. Schraubteil nach einem der vorangegangenen Ansprüche, **dadurch gekennzeichnet, dass** diejenige Nut (40 oder 30), die nicht mit der Montageschräge (38) verbunden ist, eine radiale Tiefe hat, die größer als die in gleicher Richtung ermittelte Querschnittsabmessung des Federrings (42) ist, vorzugsweise 1,5 mal größer als diese Querschnittsabmessung ist.

10. Schraubteil nach einem der vorangegangenen Ansprüche, **dadurch gekennzeichnet, dass** der Federring (42) aus Rundmaterial gefertigt ist.

11. Schraubteil nach einem der vorangegangenen Ansprüche, **dadurch gekennzeichnet, dass** mindestens eine der Nuten (30, 40) einen halbrunden Nutboden aufweist.

12. Schraubteil nach einem der vorangegangenen Ansprüche, **dadurch gekennzeichnet, dass** der Federring (42) sinusförmig gewellt ist.

13. Schraubteil nach einem der vorangegangenen Ansprüche, **dadurch gekennzeichnet, dass** die Endbereiche (48) auf die Nut (30 bzw. 40) weisen, die nicht mit der Montageschräge (38) verbunden ist.

14. Schraubteil nach einem der vorangegangenen Ansprüche, **dadurch gekennzeichnet, dass**. der Federring (42) vor dem Einbau einen freien Außendurchmesser aufweist, der etwas, insbesondere 2 bis 10%, größer ist als der größte Durchmesser der Innennut (40) des Ringkörpers (36).

15. Schraubteil nach einem der vorangegangenen Ansprüche, **dadurch gekennzeichnet, dass** der Federring (42) vor dem Einbau einen freien Innendurchmesser aufweist, der etwas, insbesondere 2 bis 10%, kleiner ist als der kleinste Durchmesser der Außennut (30) des Kopfes (20).

## Claims

1. A screw portion for a theft-protected attachment of a rim of a motor vehicle, comprising a) a head (20) having an encrypted drive surface (22) for the introduction of a torque, b) an annular body (36) surrounding the head (20) and having an outer surface, wherein an inner groove (40) is provided in the annular body (36) and an opposite outer groove (30) is provided in the head (20) and c) a non-circular spring ring (42) that is disposed between the head (20) and the annular body (36), engages with the inner groove (40) and the outer groove (30), comprises outer regions (44) that engage with the inner groove (40), and comprises two end regions (48), **characterised in that** the spring ring (42) is wavy and comprises inner regions (46), that the inner regions (46) engage into the outer groove (30), that a peripheral inclined mounting portion (38) is provided on the annular body (36) and/or on the head (20), that the inclined mounting portion (38) is located in front of the respective groove (30, 40) in the mounting direction, and that the end portions (48), in a preliminary stage of the assembly, in which the spring ring (42) is inserted into the groove (30 or 40) that is not connected to the inclined mounting portion (38), but in which the inclined mounting portion (38) has not yet passed the spring ring (42), are located within the groove (30 or 40) not connected to the inclined mounting portion (38).

2. The screw portion according to claim 1, **characterised in that** both grooves (30, 40) extend over 360° each.

3. The screw portion according to claim 1 or 2, **characterised in that** the spring ring (42), in an intermediary state during assembly, is located practically only in one of the two grooves (30, 40), wherein it is retained within the groove (30, 40) by inward pressure onto its outer regions (44) and outward pressure onto its inner regions (46) and assumes a compressed state, and that this state occurs during assembly, when the annular body (36) is axially partially pushed onto the head (20) and after the inclined mounting portion (38) has passed the spring ring (42), but before the assembled state has been reached, i.e. before the two grooves (30, 40) lie opposite to each other.

4. The screw portion according to claim 3, **characterised in that** the spring ring (42) extends over less than 360° in the compressed state.

5. The screw portion according to any one of the preceding claims, **characterised in that** the spring ring (42), in the assembled state, extends over an angle range that is smaller than in the compressed state.

6. The screw portion according to any one of the preceding claims, **characterised in that** the thickness d of the ring spring is slightly smaller, in particular 5 to 25% smaller, than the axial width of at least one of the grooves (30, 40).

7. The screw portion according to any one of the preceding claims, **characterised in that** both grooves (30, 40) have the same axial width.

8. The screw portion according to any one of the preceding claims, **characterised in that** the groove (30 or 40) that is connected to the inclined mounting portion (38) has a radial depth that is smaller than the cross-sectional dimension of the spring ring (42) determined in the same direction, but is preferably greater than half of that cross-sectional dimension.

9. The screw portion according to any one of the preceding claims, **characterised in that** the groove (40 or 30) that is not connected to the inclined mounting portion (38) has a radial depth that is greater than the cross-sectional dimension of the spring ring (42) determined in the same direction, preferably 1.5 times greater than that cross-sectional dimension.

10. The screw portion according to any one of the preceding claims, **characterised in that** the spring ring (42) is fabricated from round stock.

11. The screw portion according to any one of the preceding claims, **characterized in that** at least one of the grooves (30, 40) has a semicircular groove bottom.

12. The screw portion according to any one of the preceding claims, **characterised in that** the spring ring (42) is wavy in a sine shape.

13. The screw portion according to any one of the preceding claims, **characterised in that** the end portions (48) point towards the groove (30 or 40) that is not connected to the inclined mounting portion (38).

14. The screw portion according to any one of the preceding claims, **characterised in that** the spring ring (42), prior to installation, has a free external diameter that is slightly larger, in particular 2 to 10% larger, than the largest diameter of the inner groove (40) of the annular body (36).

15. The screw portion according to any one of the preceding claims, **characterised in that** the spring ring (42), prior to installation, has a free internal diameter that is slightly smaller, in particular 2 to 10% smaller, than the smallest diameter of the outer groove (30) of the head (20).

## Revendications

1. Pièce de vissage pour une fixation antivol d'une jante d'un véhicule automobile, comprenant a) une tête (20) qui présente une surface d'entraînement (22) codée pour appliquer un couple, b) un corps annulaire (36) qui entoure ladite tête (20) et présente une surface extérieure, une rainure intérieure (40) étant prévue dans ledit corps annulaire (36) et une rainure extérieure (30) opposée étant prévue dans ladite tête (20), et c) une bague élastique (42) non ronde qui est disposée entre ladite tête (20) et ledit corps annulaire (36), s'engage dans la rainure intérieure (40) et dans la rainure extérieure (30), présente des zones extérieures (44) qui s'engagent dans la rainure intérieure (40), et présente deux zones d'extrémité (48), **caractérisée par le fait que** ladite bague élastique (42) est ondulée et présente des zones intérieures (46), que les zones intérieures (46) s'engagent dans la rainure extérieure (30), qu'un biseau de montage (38) périphérique est prévu sur le corps annulaire (36) et/ou sur la tête (20), que ledit biseau de montage (38) est situé, dans la direction de montage, en amont de la rainure (30, 40) respective et que, dans un état préalable du montage dans lequel ladite bague élastique (42) est insérée dans la rainure (30 ou 40) non pas liée au biseau de montage (38), mais le biseau de montage (38) n'a pas encore passé la bague élastique (42), les zones d'extrémité (48) se trouvent à l'intérieur de la rainure (30 ou 40) non pas liée au biseau de montage (38).

2. Pièce de vissage selon la revendication 1, **caractérisée par le fait que** les deux rainures (30, 40) s'étendent chacune sur 360°.

3. Pièce de vissage selon la revendication 1 ou 2, **caractérisée par le fait que**, dans un état intermédiaire durant le montage, la bague élastique (42) ne se trouve pratiquement que dans l'une des deux rainures (30, 40), celle-ci étant retenue à l'intérieur de la rainure (30, 40) par une pression exercée sur ses zones extérieures (44) vers l'intérieur et une pression exercée sur ses zones intérieures (46) vers l'extérieur, et prenant un état comprimé, et que cet état se produit durant le montage lorsque le corps annulaire (36) est enfilé axialement en partie sur la tête (20) et après que ledit biseau de montage (38) a passé la bague élastique (42), mais avant que l'état monté soit atteint, donc avant que les deux rainures (30, 40) soient situées en regard l'une de l'autre.

4. Pièce de vissage selon la revendication 3, **caractérisée par le fait que**, en état comprimé, ladite bague élastique (42) s'étend sur moins de 360°.

5. Pièce de vissage selon l'une quelconque des revendications précédentes, **caractérisée par le fait que**, en état monté, ladite bague élastique (42) s'étend sur une zone angulaire qui est plus petite que celle en état comprimé.

6. Pièce de vissage selon l'une quelconque des revendications précédentes, **caractérisée par le fait que** l'épaisseur d de l'anneau-ressort est quelque peu plus petite, en particulier de 5 à 25 % plus petite que la largeur axiale de l'une au moins des rainures (30, 40).

7. Pièce de vissage selon l'une quelconque des revendications précédentes, **caractérisée par le fait que** les deux rainures (30, 40) présentent la même largeur axiale.

8. Pièce de vissage selon l'une quelconque des revendications précédentes, **caractérisée par le fait que** la rainure (30 ou 40) qui est liée au biseau de montage (38) présente une profondeur radiale qui est inférieure à la dimension en coupe transversale de la bague élastique (42) déterminée dans la même direction, mais de préférence supérieure à la moitié de cette dimension en coupe transversale.

9. Pièce de vissage selon l'une quelconque des revendications précédentes, **caractérisée par le fait que** la rainure (40 ou 30) qui n'est pas liée au biseau de montage (38) présente une profondeur radiale qui est supérieure à la dimension en coupe transversale de la bague élastique (42) déterminée dans la même direction, de préférence 1,5 fois plus grande que cette dimension en coupe transversale.

10. Pièce de vissage selon l'une quelconque des revendications précédentes, **caractérisée par le fait que** ladite bague élastique (42) est fabriquée en ronds.

11. Pièce de vissage selon l'une quelconque des revendications précédentes, **caractérisée par le fait que** l'une au moins des rainures (30, 40) présente un fond de rainure demi-circulaire.

12. Pièce de vissage selon l'une quelconque des revendications précédentes, **caractérisée par le fait que** ladite bague élastique (42) est ondulée de manière sinusoïdale.

13. Pièce de vissage selon l'une quelconque des revendications précédentes, **caractérisée par le fait que** les zones d'extrémité (48) montrent vers la rainure (30 ou bien 40) qui n'est pas liée au biseau de montage (38).

14. Pièce de vissage selon l'une quelconque des revendications précédentes, **caractérisée par le fait que**, avant le montage, ladite bague élastique (42) présente un diamètre extérieur libre qui est quelque peu plus grand, en particulier de 2 à 10 % plus grand que le diamètre le plus grand de la rainure intérieure (40) du corps annulaire (36).

15. Pièce de vissage selon l'une quelconque des revendications précédentes, **caractérisée par le fait que**, avant le montage, ladite bague élastique (42) présente un diamètre intérieur libre qui est quelque peu plus petit, en particulier de 2 à 10 % plus petit que le diamètre le plus petit de la rainure extérieure (30) de ladite tête (20).
